# EUROPEAN PATENT APPLICATION

(11) **EP 4 819 287 A1**
(43) Date of publication of application: **07.10.2026**
(21) Application number: 25903182.1
(22) Date of filing: 12.11.2025
(51) Int. Cl.: H01M 10/058

(54) **BATTERY AND BATTERY PACK**

(30) Priority: 13.12.2024 CN 202411844724
(71) Applicant: Sunwoda Mobility Energy Technology Co., Ltd., Shenzhen, Guangdong 518107 (CN)
(72) Inventor: LI, Deshun, Shenzhen, Guangdong 518107 (CN); JIANG, You, Shenzhen, Guangdong 518107 (CN); DUAN, Haibo, Shenzhen, Guangdong 518107 (CN); LUO, Chengchen, Shenzhen, Guangdong 518107 (CN)
(74) Representative: Elzaburu S.L.P.
(86) International application number: PCT/CN2025/134506
(87) International publication number: WO 2026/124104

(57) **Abstract**

The present application discloses a battery and a battery pack, belonging to the technical field of batteries. The battery includes an outer housing having an accommodating cavity and an opening communicating with the accommodating cavity; an inner housing disposed in the accommodating cavity, having a liquid injection cavity communicating with the opening in a first direction; a liquid storage cavity defined between the inner housing and the outer housing; an electrode assembly disposed in the liquid injection cavity; a cover assembly covering and sealing the opening, where a first gap is provided between the cover assembly and the inner housing in the first direction and communicates the liquid injection cavity with the liquid storage cavity, and the cover assembly is provided with a liquid injection hole communicating with the liquid injection cavity; and a unidirectional conducting member disposed in the inner housing and configured to allow the liquid storage cavity to unidirectionally communicate with the liquid injection cavity in response to a pressure inside the liquid storage cavity exceeding a threshold value. The present application is beneficial for reducing wrinkling of the electrode assembly during charging and discharging process of the battery and extending the cycle service life of the battery.

## Description

This application claims priority to Chinese Patent Application No. 202411844724.4, filed with the China National Intellectual Property Administration on December 13, 2024, and entitled "BATTERY AND BATTERY PACK", which is hereby incorporated by reference in its entirety.

### TECHNICAL FIELD

The present application relates to the technical field of batteries, and in particular to a battery and a battery pack.

### BACKGROUND

During use of a lithium battery, electrolyte is continuously consumed and gas is generated. When the electrolyte is consumed to a certain extent, insufficient wetting of electrode sheets is likely to occur, which leads to lithium precipitation on the electrode sheets and a significant decrease in capacity retention rate, thereby affecting the cycle life of the battery.

### SUMMARY

Objective of the Invention: Embodiments of the present application provide a battery for solving the above technical problems. Another objective of the present application is to provide a battery pack employing the battery described above.

Technical Solution: a battery is described in embodiments of the present application. The battery has a first direction, and the battery includes:
an outer housing, having an accommodating cavity and an opening communicating with the accommodating cavity;
an inner housing, disposed in the accommodating cavity, where the inner housing has a liquid injection cavity, the liquid injection cavity communicates with the opening along the first direction, and a liquid storage cavity is defined between the inner housing and the outer housing;
an electrode assembly, disposed in the liquid injection cavity;
a cover assembly, disposed to cover and seal the opening, where a first gap is disposed between the cover assembly and the inner housing in the first direction, and the first gap communicates the liquid injection cavity with the liquid storage cavity, the cover assembly is provided with a liquid injection hole, and the liquid injection hole communicates with the liquid injection cavity; and
a unidirectional conducting member, disposed on the inner housing, where the unidirectional conducting member is configured to allow the liquid storage cavity to unidirectionally communicate with the liquid injection cavity in response to a pressure inside the liquid storage cavity exceeding a threshold value.

In some embodiments, the inner housing has a first end and a second end arranged opposite to each other in the first direction, the first end faces the cover assembly, and the unidirectional conducting member is disposed at the second end.

In some embodiments, the battery further includes a flow guide assembly disposed in the liquid storage cavity, the flow guide assembly is connected with the outer housing and the inner housing, the flow guide assembly partitions the liquid storage cavity and forms a flow guide channel, the flow guide channel has a third end and a fourth end arranged opposite to each other in the first direction, the third end faces the cover assembly, and the flow guide channel is configured to hinder electrolyte from flowing from the fourth end to the third end.

In some embodiments, the flow guide assembly includes a plurality of flow guide groups, each of the plurality of flow guide groups has a plurality of flow guide portions, the plurality of flow guide groups are arranged at intervals in the liquid storage cavity along the first direction, the plurality of flow guide portions of each of the plurality of flow guide groups are arranged in a direction intersecting the first direction, and a second gap is provided between adjacent flow guide portions;
between two adjacent flow guide groups, at least part of the flow guide portions in one group at least partially face the second gap between two adjacent flow guide portions in the other group, and in the direction intersecting the first direction, a width of the flow guide portion facing the second gap is *a*, and a width of the second gap is *b*, satisfying *a* ≥ *b*.

In some embodiments, the flow guide portion has a fifth end and a sixth end arranged opposite to each other in the first direction, the fifth end faces the cover assembly, and the flow guide portion has a flow guide surface that is inclined from the fifth end toward the sixth end.

In some embodiments, the flow guide portion includes a first sub-portion, a second sub-portion and a third sub-portion that are connected with each other; the first sub-portion is disposed on a side, facing the cover assembly, of the second sub-portion and the third sub-portion, and the first sub-portion extends along the first direction, and between two adjacent flow guide portions in each flow guide portion, the second gap is formed between the second sub-portion of one flow guide portion and the third sub-portion of the other flow guide portion;
in the first direction, at least part of the first sub-portion faces the second gap, the second sub-portion and the third sub-portion each extend inclinedly from an end connected to the first sub-portion toward the fourth end, and an included angle is formed between an extending direction of the second sub-portion and an extending direction of the third sub-portion;
the first sub-portion has a seventh end away from the second sub-portion to which it is connected, the second sub-portion has an eighth end away from the first sub-portion to which it is connected, the third sub-portion has a ninth end away from the first sub-portion to which it is connected, and in the direction intersecting the first direction, a width of the seventh end is *c*, satisfying *b* ≥ *c*, and a distance between the eighth end and the ninth end is *d*, satisfying *b* < *d*.

In some embodiments, the flow guide assembly further includes a first baffle and a second baffle, the flow guide portion is connected between the first baffle and the second baffle, the first baffle, the second baffle and the flow guide portion define the flow guide channel, the first baffle, the second baffle and the flow guide portion are disposed in the liquid storage cavity, the first baffle is connected to the outer housing, and the second baffle is connected to the inner housing; and
a communication port is formed through the second baffle toward the unidirectional conducting member, and the communication port communicates with the flow guide channel.

In some embodiments, a plurality of liquid storage cavities are provided, the plurality of liquid storage cavities are distributed around an outer peripheral side of the inner housing, and are at least partially communicated with each other.

In some embodiments, the battery further has a second direction and a third direction, and the first direction, the second direction and the third direction intersect each other pairwise;
the inner housing has a first side and a second side arranged opposite to each other in the second direction, and the inner housing has a third side and a fourth side arranged opposite to each other in the third direction; and
the liquid storage cavity is disposed on one of the first side, the second side, the third side and the fourth side.

In some embodiments, the battery further has a second direction and a third direction, and the first direction, the second direction and the third direction intersect each other pairwise;
the inner housing has a first side and a second side arranged opposite to each other in the second direction, and the inner housing has a third side and a fourth side arranged opposite to each other in the third direction; and
a plurality of liquid storage cavities are provided, the plurality of liquid storage cavities are arranged at intervals on at least one of the first side, the second side, the third side and the fourth side, and the inner housing is provided with the unidirectional conducting member corresponding to each of the plurality of liquid storage cavities.

In some embodiments, the inner housing has a first end facing the cover assembly in the first direction; and
the electrode assembly includes a cell body and a tab connected to the cell body, the tab is located at an end of the cell body facing the cover assembly, and in the first direction, the end of the cell body facing the cover assembly is lower than the first end or flush with the first end.

Correspondingly, a battery pack of an embodiment of the present application includes the battery described above.

Beneficial effects: a battery of an embodiment of the present application includes an outer housing, an inner housing, an electrode assembly, a cover assembly, and a unidirectional conducting member. The outer housing has an accommodating cavity and an opening communicating with the accommodating cavity. The inner housing is disposed in the accommodating cavity, and the inner housing has a liquid injection cavity communicating with the opening in a first direction. A liquid storage cavity is defined between the inner housing and the outer housing. The electrode assembly is disposed in the liquid injection cavity. The cover assembly covers the opening, and a first gap is disposed between the cover assembly and the inner housing in the first direction, and the first gap communicates the liquid injection cavity with the liquid storage cavity. The cover assembly is provided with a liquid injection hole, and the liquid injection hole communicates with the liquid injection cavity. The unidirectional conducting member is disposed on the inner housing, and is configured to allow the liquid storage cavity to unidirectionally communicate with the liquid injection cavity in response to a pressure inside the liquid storage cavity exceeding a threshold value. Electrolyte is injected into the liquid injection cavity through the liquid injection hole, and part of the electrolyte flows into the liquid storage cavity through the first gap and is stored therein. During use of the battery, the electrolyte in the liquid injection cavity is consumed and gas is generated, and the gas enters the liquid storage cavity through the first gap. As the gas increases to reach the conduction pressure threshold value of the unidirectional conducting member, the electrolyte stored in the liquid storage cavity is pressed into the liquid injection cavity by the gas, thereby replenishing the electrolyte to the liquid injection cavity and wetting the electrode assembly, which is beneficial for extending the cycle service life of the battery. In addition, the inner housing provides a restraining effect on the electrode assembly, which is beneficial for reducing wrinkles generated in the electrode assembly during charging and discharging process, thereby improving the stability of the battery.

### BRIEF DESCRIPTION OF DRAWINGS

In order to illustrate the technical solutions in the embodiments of the present application more clearly, the drawings required for the description of the embodiments are briefly introduced below. Apparently, the drawings in the following description are only some embodiments of the present application. For those skilled in the art, other drawings may be obtained based on these drawings without creative efforts.
FIG. 1 is a schematic structural diagram of a battery of an embodiment of the present application.
FIG. 2 is a schematic diagram of exploded structure of a battery of an embodiment of the present application.
FIG. 3 is a schematic structural diagram of a cover assembly of a battery of an embodiment of the present application viewed frontally along a first direction.
FIG. 4 is a cross-sectional view taken along line A-A in FIG. 3.
FIG. 5 is a cross-sectional view taken along line B-B in FIG. 3.
FIG. 6 is a schematic structural diagram of an accommodating cavity, a liquid injection cavity and a liquid storage cavity of an embodiment of the present application.
FIG. 7 is a cross-sectional view taken along line C-C in FIG. 6.
FIG. 8 is a schematic structural diagram of a flow guide assembly of an embodiment of the present application.
FIG. 9 is a schematic structural diagram of a split-type flow guide assembly of an embodiment of the present application.
FIG. 10 is a schematic structural diagram of a flow guide portion of an embodiment of the present application.
FIG. 11 is a schematic structural diagram of a flow guide portion of another embodiment of the present application.
FIG. 12 is a schematic structural diagram of a flow guide portion of another embodiment of the present application.
FIG. 13 is a cross-sectional view showing an inner housing higher than a cell body of another embodiment of the present application.

Reference signs: 1. outer housing; 10. accommodating cavity; 11. opening; 12. liquid storage cavity; 13. first gap; 2. inner housing; 20. liquid injection cavity; 21. first end; 22. second end; 23. first side; 24. second side; 25. third side; 26. fourth side; 3. electrode assembly; 30. cell body; 31. tab; 4. cover assembly; 40. cover plate; 41. liquid injection hole; 42. insulating member; 43. terminal; 5. unidirectional conducting member; 6. flow guide assembly; 60. flow guide channel; 600. third end; 601. fourth end; 61. flow guide portion; 610. fifth end; 611. sixth end; 612. first sub-portion; 6120. seventh end; 613. second sub-portion; 6130. eighth end; 614. third sub-portion; 6140. ninth end; 615. flow guide surface; 62. second gap; 63. first baffle; 64. second baffle; 640. communication port; 7. explosion-proof valve; X. first direction; Y. second direction; Z. third direction.

### DESCRIPTION OF EMBODIMENTS

The technical solutions in the embodiments of the present application will be clearly and completely described below with reference to the drawings in the embodiments of the present application. Apparently, the described embodiments are only some of the embodiments of the present application, rather than all of the embodiments. Based on the embodiments of the present application, all other embodiments obtained by those skilled in the art without creative effort shall fall within the scope of protection of the present application.

In the description of the present application, it is to be understood that the orientation or positional relationships indicated by the terms "length", "width", "thickness", "upper", "lower", "front", "rear", "left", "right", "top", "bottom", "inner", "outer", and the like are based on the orientation or positional relationships shown in the drawings, and are merely for the convenience of describing the present application and simplifying the description, rather than indicating or implying that the referred device or element should have a particular orientation, and be constructed and operated in a particular orientation, and therefore cannot be construed as limitations on the present application. In addition, the terms "first", "second" are used for descriptive purposes only and are not to be understood as indicating or implying relative importance or implicitly indicating the number of the technical features indicated. Thus, features defined with "first" or "second" may explicitly or implicitly include one or more features. In the description of the present application, "a plurality of" means two or more, and "at least one" means one, two, or more, unless otherwise expressly and specifically defined.

Currently, during use of a lithium battery, electrolyte will be continuously consumed and gas is generated. When the electrolyte is consumed to a certain extent, insufficient wetting of the electrode sheets is prone to occurrence, which leads to lithium precipitation on the electrode sheets and a significant decrease in capacity retention rate, thereby affecting the cycle life of the battery.

In addition, during process of charging and discharging of the battery, the electrode sheets inside the battery expand. Some power batteries do not restrain such expansion, which tends to cause uneven stress release of the electrode sheets, further leading to wrinkling of the electrode sheets and affecting the operational stability of the battery.

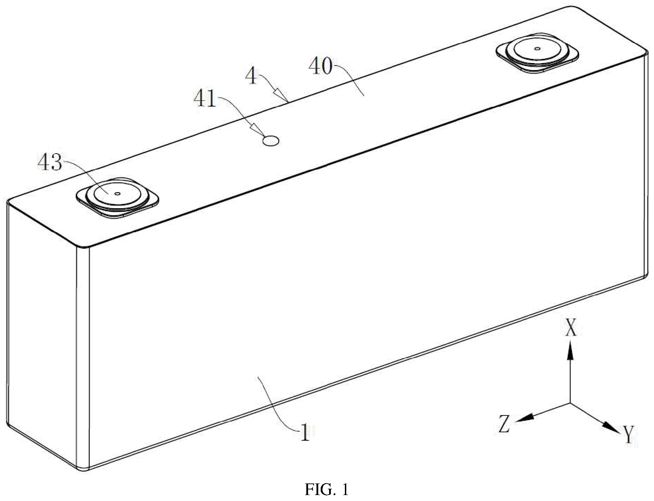

In view of this, referring to FIGS. 1 to 13, a battery is provided by an embodiment of the present application for solving at least one of the above technical problems.

It should be noted that a first direction X, a second direction Y, and a third direction Z intersecting each other pairwise are introduced in the following embodiments. Referring to FIG. 1, the first direction X is substantially parallel to a height direction of the battery as a whole, the second direction Y is substantially parallel to a thickness direction of the battery as a whole, and the third direction Z is substantially parallel to a length direction of the battery as a whole.

Referring to FIGS. 1 to 7, a battery includes an outer housing 1, an inner housing 2, an electrode assembly 3, a cover assembly 4, a unidirectional conducting member 5, and an explosion-proof valve 7.

The outer housing 1 has an accommodating cavity 10 and an opening 11 communicating with the accommodating cavity 10. The inner housing 2 is disposed in the accommodating cavity 10, and the inner housing 2 has a liquid injection cavity 20. The liquid injection cavity 20 communicates with the opening 11 in a first direction X. A liquid storage cavity 12 is defined between the inner housing 2 and the outer housing 1. The electrode assembly 3 is disposed in the liquid injection cavity 20. The cover assembly 4 is provided to cover and seal the opening 11. A first gap 13 is provided between the cover assembly 4 and the inner housing 2 in the first direction X, where the first gap 13 communicating the liquid injection cavity 20 with the liquid storage cavity 12. The cover assembly 4 is provided with a liquid injection hole 41, and the liquid injection hole 41 communicates with the liquid injection cavity 20. A unidirectional conducting member 5 is disposed on the inner housing 2, and the unidirectional conducting member 5 is configured to allow the liquid storage cavity 12 to unidirectionally communicate with the liquid injection cavity 20 when a pressure in the liquid storage cavity 12 exceeds a threshold value.

Electrolyte is injected into the liquid injection cavity 20 through the liquid injection hole 41, and part of the electrolyte flows into the liquid storage cavity 12 through the first gap 13 for storage. During use of the battery, the electrolyte in the liquid injection cavity 20 is consumed and gas is generated, and the gas enters the liquid storage cavity 12 through the first gap 13. As the generated gas increases to reach a conduction pressure threshold value of the unidirectional conducting member 5, the electrolyte stored in the liquid storage cavity 12 can, by virtue of the gas pressure, pass through the unidirectional conducting member 5 and enter the liquid injection cavity 20, thereby replenishing the electrolyte to the liquid injection cavity 20 and wetting the electrode assembly 3, which is beneficial for extending the service life of the battery. During the process of charging and discharging of the battery, the inner housing 2 simultaneously provides a restraining effect on the electrode assembly 3, and at the same time the liquid storage cavity 12 can also serve as a buffer space for the expansion of the electrode assembly 3, which is beneficial for reducing wrinkling of the electrode assembly 3 during the process of charging and discharging, thereby improving the stability of the battery.

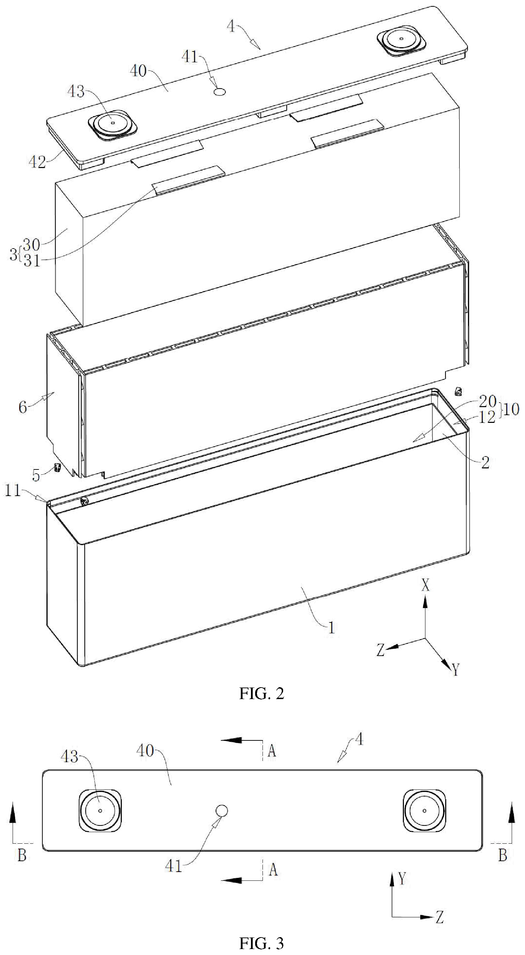

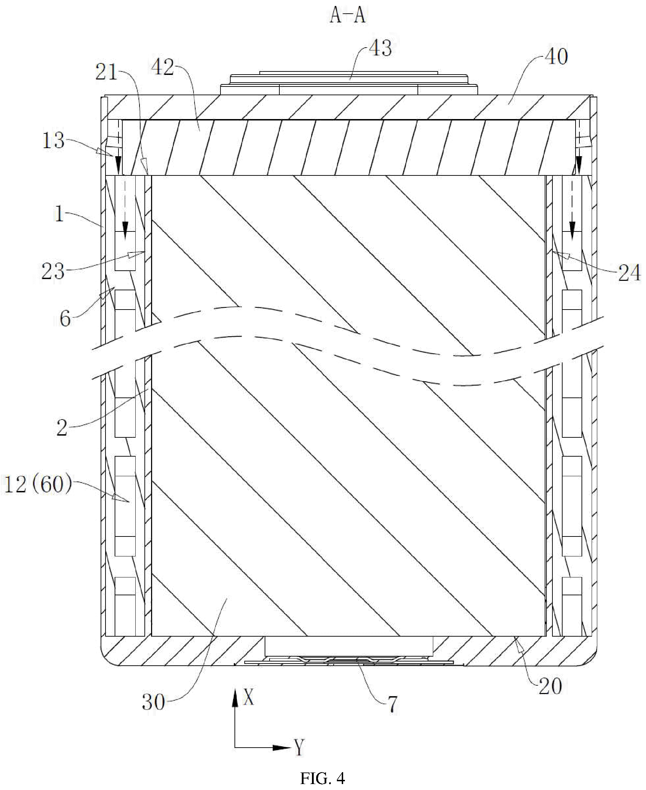

In some embodiments, referring to FIG. 2, FIG. 4 and FIG. 5, the cover assembly 4 includes a cover plate 40, an insulating member 42 and a terminal 43. The cover plate 40 is provided to cover and seal the opening 11, and the liquid injection hole 41 is provided in the cover plate 40. The insulating member 42 is disposed on a side of the cover plate 40 facing the electrode assembly 3 to separate the cover plate 40 from the electrode assembly 3 in an insulated manner. The terminal 43 penetrates through the cover plate 40 and is configured to electrically connect to the electrode assembly 3. Referring to FIG. 4, the first gap 13 is formed between the cover plate 40 and the electrode assembly 3.

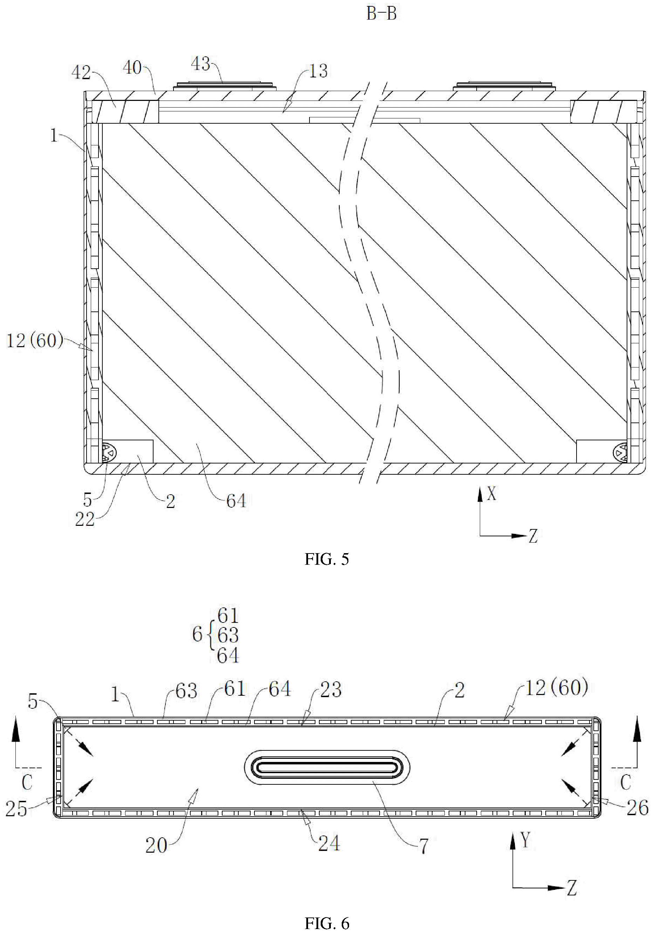

In some embodiments, referring to FIG. 4 and FIG. 5, the inner housing 2 is provided with a first end 21 and a second end 22 arranged opposite to each other in the first direction X, with the first end 21 facing the cover plate 40. The electrode assembly 3 includes a cell body 30 and a tab 31 connected to the cell body 30. The tab 31 is located at an end of the cell body 30 facing the cover plate 40, so as to facilitate electrical connection to the terminal 43. In the first direction X, the end of the cell body 30 facing the cover plate 40 does not protrude beyond the first end 21. In the present embodiment, the end of the cell body 30 facing the cover plate 40 being flush with the first end 21 is taken as an example; in other embodiments, the end of the cell body 30 facing the cover plate 40 may also be lower than the first end 21. At the same time, a height of the outer housing 1 in the first direction X is greater than a height of the inner housing 2 in the first direction X, so that the cover plate 40 can cover and seal the opening 11, and ensure that the electrolyte can smoothly enter the liquid storage cavity 12 for storage.

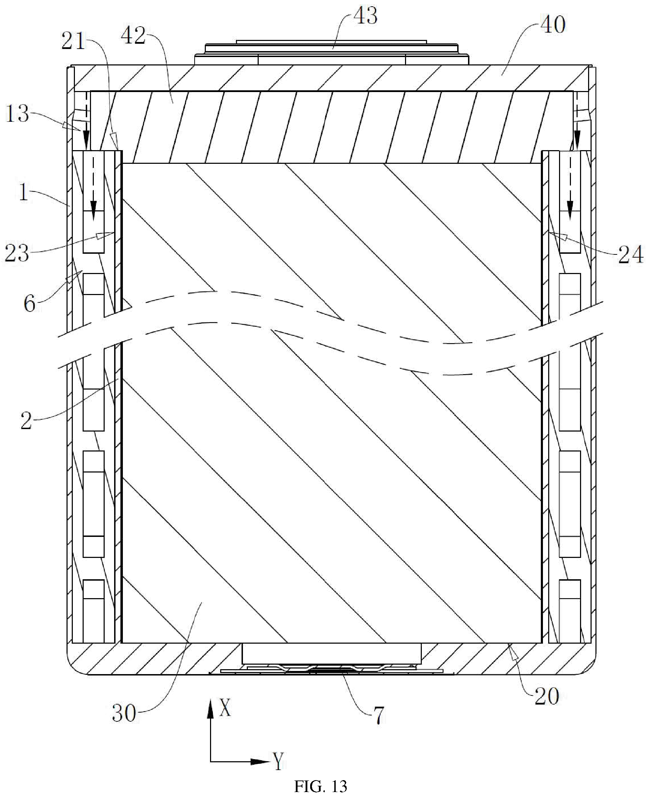

The end of the cell body 30 facing the cover plate 40 is flush with the first end 21 as shown in FIG. 4. In other embodiments, as shown in FIG. 13, the end of the cell body 30 facing the cover plate 40 may also be lower than the first end 21, so that the inner housing 2 can completely wrap around an outer peripheral side of the cell body 30, preventing an inner edge of the first end 21 of the inner housing 2 from pressing against the cell body 30 during the expansion of the cell body 30 in the process of charging and discharging, thereby reducing the risk of damage to the cell body 30 and improving protection and restraining effect on the cell body 30.

In some embodiments, referring to FIG. 4 and FIG. 5, the unidirectional conducting member 5 is disposed at the second end 22. The unidirectional conducting member 5 may be a one-way valve, and the unidirectional conduction principle of which belongs to the prior art, which will not be described in detail herein. The unidirectional conducting member 5 is disposed at the second end 22 to fully utilize the height of the inner housing 2, i.e., to ensure full utilization of the electrolyte stored in the liquid storage cavity 12. In other embodiments, the arrangement position of the unidirectional conducting member 5 may be flexibly adjusted, as long as it can communicate the liquid storage cavity 12 with the liquid injection cavity 20 and is spaced apart from the first end 21 in the first direction X.

In some embodiments, referring to FIG. 2 to FIG. 7, a plurality of liquid storage cavities 12 are provided, and the plurality of liquid storage cavities 12 are distributed around the outer peripheral side of the inner housing 2, and at least part of the liquid storage cavities 12 communicate with each other.

Specifically, in the present embodiment, a prismatic battery is taken as an example. Referring to FIG. 2 to FIG. 7, the inner housing 2 has a first side 23 and a second side 24 arranged opposite to each other in a second direction Y, and the inner housing 2 has a third side 25 and a fourth side 26 arranged opposite to each other in a third direction Z. Each of the first side 23, the second side 24, the third side 25 and the fourth side 26 of the inner housing 2 is spaced apart from the corresponding side of the outer housing 1. That is, the first side 23, the second side 24, the third side 25 and the fourth side 26 of the inner housing 2 each form a liquid storage cavity 12 with the outer housing 1. Each liquid storage cavity 12 surrounds the inner housing 2 and communicates with one another. It may also be regarded that a plurality of liquid storage cavities 12 are communicated to form an integral liquid storage cavity 12 surrounding the inner housing 2. Correspondingly, a plurality of unidirectional conducting members 5 may be arranged and disposed around the inner housing 2. The liquid storage cavities 12 surrounding the inner housing 2 and the plurality of unidirectional conducting members 5 facilitate uniform storage and introduction of electrolyte into the liquid injection cavity 20, improving the storage amount of electrolyte and the uniformity of electrolyte replenishment.

It can be understood that in other embodiments, some of the liquid storage cavities 12 may not be communicated with other liquid storage cavities 12. In this case, a corresponding unidirectional conducting member 5 needs to be arranged for independent liquid storage cavity 12 to ensure that the independent liquid storage cavity 12 can output electrolyte.

In addition, in some embodiments, only one liquid storage cavity 12 may be provided, and the liquid storage cavity 12 is disposed on one of the first side 23, the second side 24, the third side 25 and the fourth side 26. It can be understood that, under the condition that the overall volume of the battery remains unchanged, increasing the volume of the liquid storage cavity 12 will reduce the volume of the liquid injection cavity 20 and the volume of the cell body 30 to a certain extent according to the flexible choice of designer. When only one liquid storage cavity 12 is provided and is disposed on one of the first side 23, the second side 24, the third side 25 and the fourth side 26, the other three sides of the inner housing 2 may abut against the outer housing 1 to appropriately increase the volume of the liquid injection cavity 20, which will not be described in detail herein.

Furthermore, in some embodiments, a plurality of liquid storage cavities 12 may also be provided. Different from the solution in which the above-mentioned liquid storage cavities 12 are communicated, the plurality of liquid storage cavities 12 may be arranged at intervals on at least one of the first side 23, the second side 24, the third side 25 and the fourth side 26. In this case, for each liquid storage cavity 12, the inner housing 2 is provided with respective unidirectional conducting member 5.

It should be noted that, in some embodiments, referring to FIG. 2 and FIG. 4, the outer housing 1 and the inner housing 2 may be integrally formed or connected by welding, and the like.

It can be understood that, in order to quickly inject the electrolyte into the accommodating cavity 10, positive pressure and negative pressure are adopted, i.e., gas is filled into or evacuated from the accommodating cavity 10 to ensure that the electrolyte is fully injected into the accommodating cavity 10. However, during gas evacuation, there is an issue of the electrolyte being drawn out of the accommodating cavity 10, affecting the injection efficiency of the electrolyte.

In view of this, in some embodiments, referring to FIG. 2 to FIG. 12, the battery also includes a flow guide assembly 6. The flow guide assembly 6 is disposed in the liquid storage cavity 12, and is connected to the outer housing 1 and the inner housing 2. The flow guide assembly 6 partitions the liquid storage cavity 12 and forms a flow guide channel 60. The flow guide channel 60 has a third end 600 and a fourth end 601 arranged opposite to each other in the first direction X, and the third end 600 faces the cover plate 40. The flow guide channel 60 is configured to hinder electrolyte from flowing from the fourth end 601 to the third end 600.

With the flow hindering effect of the flow guide assembly 6, the electrolyte that has already been injected into the liquid storage cavity 12 is difficult to flow from the fourth end 601 to the third end 600 during the gas evacuation, thereby reducing the problem of electrolyte backflow and improving the injection efficiency of the electrolyte.

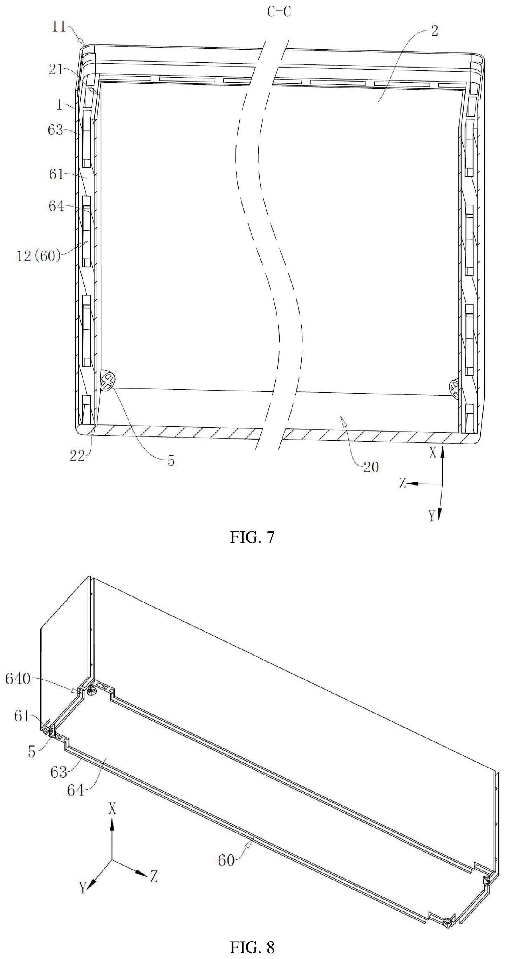

In some embodiments, referring to FIG. 8 to FIG. 12, the flow guide assembly 6 includes a plurality of flow guide groups, and each flow guide group is provided with a plurality of flow guide portions 61. The plurality of flow guide groups are arranged at intervals along the first direction X in the liquid storage cavity 12. The plurality of flow guide portions 61 of each flow guide group are arranged in a direction intersecting the first direction X, and a second gap 62 is provided between adjacent flow guide portions 61. Between two adjacent flow guide groups, at least part of the flow guide portions 61 in one group at least partially faces the second gap 62 between two adjacent flow guide portions 61 in the other group; and in the direction intersecting the first direction X, a width of the flow guide portion 61 facing the second gap 62 is *a*, and a width of the second gap 62 is *b*, satisfying *a* ≥ *b*.

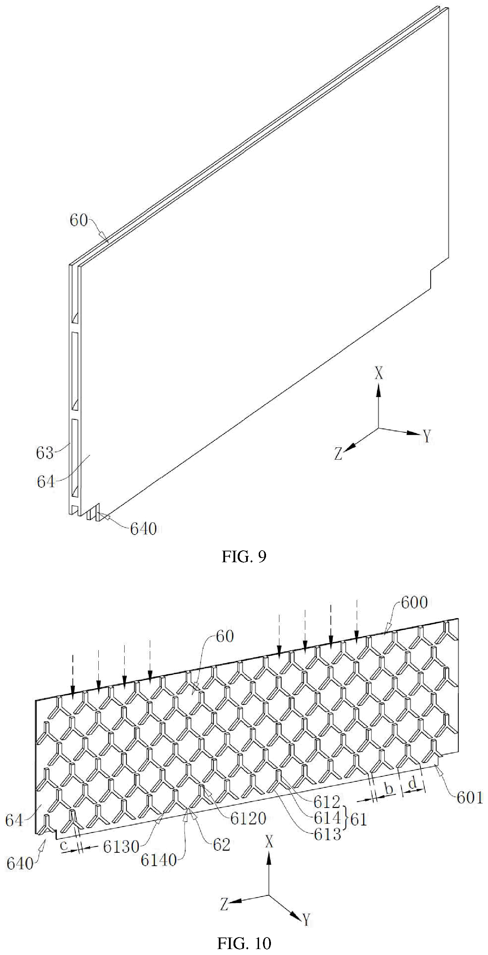

Specifically, referring to three embodiments shown in FIG. 10 to FIG. 12, taking the flow guide assembly 6 corresponding to the first side 23 and the second side 24 of the inner housing 2 as an example, the plurality of flow guide portions 61 of each flow guide group are arranged in the third direction Z. In other embodiments, taking the flow guide assembly 6 corresponding to the third side 25 and the fourth side 26 of the inner housing 2 as an example, the plurality of flow guide portions 61 of each flow guide group are arranged in the second direction Y.

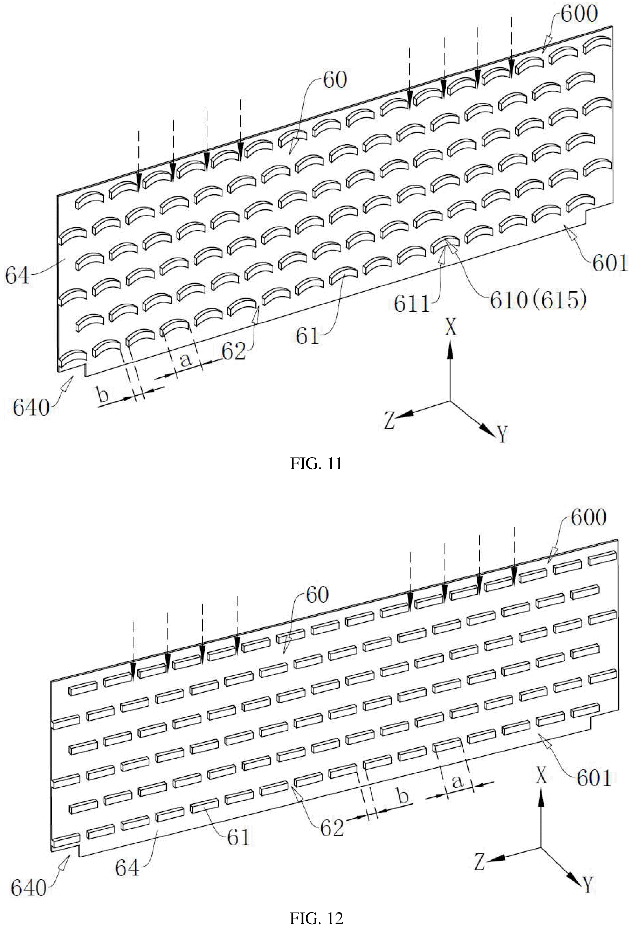

In some embodiments, referring to FIG. 12, the flow guide portion 61 adopts a rib structure extending along the third direction Z. In the first direction X, the second gap 62 faces the adjacent flow guide portion 61, so as to form a barrier that hinders the electrolyte from flowing from the fourth end 601 to the third end 600.

In some embodiments, referring to FIG. 11, the flow guide portion 61 has a fifth end 610 and a sixth end 611 arranged opposite to each other in the first direction X, and the fifth end 610 faces the cover plate 40. The flow guide portion 61 has a flow guide surface 615 that is inclined from the fifth end 610 toward the sixth end 611. In the present embodiment, the flow guide surface 615 adopts an arcuate surface structure, and the entire flow guide portion 61 forms an arcuate extending structure. Compared with the embodiment shown in FIG. 12, the flow guide surface 615 facilitates guiding the electrolyte to flow from the third end 600 to the fourth end 601, improving the efficiency of injecting electrolyte into the liquid storage cavity 12.

In addition, in some embodiments, the flow guide portion 61 may also be configured as a triangular structure or the like. One corner of the triangular flow guide portion 61 faces the adjacent second gap 62 in the first direction X, and in this case, the two sides of the triangle forming the corner serve as the flow guide surface 615, while the third side of the triangle hinders the electrolyte from flowing from the fourth end 601 to the third end 600, which will not be described in detail herein.In some embodiments, referring to FIG. 10, the flow guide portion 61 includes a first sub-portion 612, a second sub-portion 613 and a third sub-portion 614 that are connected with each other. The first sub-portion 612 is disposed on a side of the second sub-portion 613 and the third sub-portion 614 facing the cover plate 40, and the first sub-portion 612 extends along the first direction X. Between two adjacent flow guide portions 61 in each group of flow guide portions 61, the second gap 62 is formed between the second sub-portion 613 of one flow guide portion 61 and the third sub-portion 614 of the other flow guide portion 61. In the first direction X, at least part of the first sub-portion 612 faces the second gap 62. The second sub-portion 613 and the third sub-portion 614 each extend inclinedly from an end connected to the first sub-portion 612 toward the fourth end 601, and an included angle is formed between an extending direction of the second sub-portion 613 and an extending direction of the third sub-portion 614. The first sub-portion 612 has a seventh end 6120 away from the second sub-portion 613 to which it is connected. The second sub-portion 613 has an eighth end 6130 away from the first sub-portion 612 to which it is connected. The third sub-portion 614 has a ninth end 6140 away from the first sub-portion 612 to which it is connected. In the direction intersecting the first direction X, a width of the seventh end 6120 is *c*, and a distance between the eighth end 6130 and the ninth end 6140 is *d*, satisfying *b* < *d*.

By configuring the entire flow guide portion 61 to be in a Y-shape, the first sub-portion 612 can guide the electrolyte to flow from the third end 600 to the fourth end 601. The second sub-portion 613 and third sub-portion 614, which form an included angle therebetween, provide an obstruction to the upward flow of electrolyte from the second gap 62 below, namely hindering the electrolyte from flowing from the fourth end 601 to the third end 600.

In addition, in other embodiments, the overall flow guide assembly 6 may also adopt a Tesla valve structure or the like, such that the formed flow guide channel 60 can guide the electrolyte to flow from the third end 600 to the fourth end 601 and hinder the electrolyte from flowing from the fourth end 601 to the third end 600.

It can be understood that in the above embodiments, the flow guide portion 61 may be integrally formed with the inner housing 2 and the outer housing 1 directly. In some embodiments, to reduce the difficulty of manufacturing, assembly, maintenance and the like, referring to FIG. 2, FIG. 4 to FIG. 9, the flow guide assembly 6 may be arranged separately from the inner housing 2 and the outer housing 1. The flow guide assembly 6 also includes a first baffle 63 and a second baffle 64. The flow guide portion 61 is connected between the first baffle 63 and the second baffle 64. The flow guide channel 60 is defined by the first baffle 63, the second baffle 64 and the flow guide portion 61. The first baffle 63, the second baffle 64 and the flow guide portion 61 are disposed in the liquid storage cavity 12, and the first baffle 63 is connected to the outer housing 1, and the second baffle 64 is connected to the inner housing 2. A communication port 640 is formed through second baffle 64 toward the unidirectional conducting member 5, and the communication port 640 communicates with the flow guide channel 60.

It should be noted that, in some embodiments, the first baffle 63 and the second baffle 64 may be integrally formed as a frame structure surrounding the inner housing 2. The first baffle 63, the second baffle 64 and the flow guide portion 61 are integrally formed and assembled into the liquid storage cavity 12.

In order to further reduce the difficulties of manufacturing and assembly, in the present embodiment, referring to FIG. 2, FIG. 6 and FIG. 9, split-type first baffle 63 and second baffle 64 structures are respectively disposed corresponding to the first side 23, the second side 24, the third side 25 and the fourth side 26 of the inner housing 2, as long as they are distributed surrounding the inner housing 2. Also, with reference to FIG. 8, the plurality of liquid storage cavities 12 formed by the split-type first baffles 63 and second baffles 64 communicate with each other through the communication ports 640 and the notches disposed at the first baffles 63 corresponding to the communication ports 640. The first baffle 63 and the second baffle 64 may be made of the same material as the inner housing 2 and the outer housing 1, as long as the reaction with the electrolyte can be avoided.

Correspondingly, an embodiment of the present application provides a battery pack, and the battery pack includes the battery described above. The battery pack may be applied to electronic devices, energy storage devices, power vehicles, and other equipment. It can be understood that the battery pack may have all the technical features and corresponding beneficial effects of the battery described above, which will not be described in detail herein.

The foregoing has elaborated in detail on the battery and the battery pack provided by the embodiments of the present application, and specific examples have been adopted to illustrate the principles and implementations of the present application. The description of the above embodiments is merely intended to facilitate understanding the technical solutions and the core concept of the present application. Those of ordinary skill in the art should understand that they may still modify the technical solutions recorded in the foregoing embodiments or make equivalent substitutions for some of the technical features thereof. However, these modifications or substitutions do not cause the essence of the corresponding technical solutions to depart from the scope of the technical solutions of the embodiments of the present application.

## Claims

1. A battery, wherein the battery has a first direction, and the battery comprises:
an outer housing, having an accommodating cavity and an opening communicating with the accommodating cavity;
an inner housing, disposed in the accommodating cavity, wherein the inner housing has a liquid injection cavity, the liquid injection cavity communicates with the opening along the first direction, and a liquid storage cavity is defined between the inner housing and the outer housing;
an electrode assembly, disposed in the liquid injection cavity;
a cover assembly, disposed to cover and seal the opening, wherein a first gap is disposed between the cover assembly and the inner housing in the first direction, and the first gap communicates the liquid injection cavity with the liquid storage cavity, the cover assembly is provided with a liquid injection hole, and the liquid injection hole communicates with the liquid injection cavity; and
a unidirectional conducting member, disposed on the inner housing, wherein the unidirectional conducting member is configured to allow the liquid storage cavity to unidirectionally communicate with the liquid injection cavity in response to a pressure inside the liquid storage cavity exceeding a threshold value.

2. The battery according to claim 1, wherein the inner housing has a first end and a second end arranged opposite to each other in the first direction, the first end faces the cover assembly, and the unidirectional conducting member is disposed at the second end.

3. The battery according to claim 1 or 2, wherein the battery further comprises a flow guide assembly disposed in the liquid storage cavity, the flow guide assembly is connected with the outer housing and the inner housing, the flow guide assembly partitions the liquid storage cavity and forms a flow guide channel, the flow guide channel has a third end and a fourth end arranged opposite to each other in the first direction, the third end faces the cover assembly, and the flow guide channel is configured to hinder electrolyte from flowing from the fourth end to the third end.

4. The battery according to claim 3, wherein the flow guide assembly comprises a plurality of flow guide groups, each of the plurality of flow guide groups has a plurality of flow guide portions, the plurality of flow guide groups are arranged at intervals in the liquid storage cavity along the first direction, the plurality of flow guide portions of each of the plurality of flow guide groups are arranged in a direction intersecting the first direction, and a second gap is provided between adjacent flow guide portions;
between two adjacent flow guide groups, at least part of the flow guide portions in one group at least partially face the second gap between two adjacent flow guide portions in the other group, and in the direction intersecting the first direction, a width of the flow guide portions facing the second gap is *a*, and a width of the second gap is *b*, satisfying *a* ≥ *b*.

5. The battery according to claim 4, wherein the battery further has a second direction intersecting the first direction; and the plurality of flow guide portions of each of the plurality of flow guide groups are arranged in the second direction.

6. The battery according to claim 5, wherein the battery further has a third direction, and the first direction, the second direction and the third direction intersect each other pairwise; and
the plurality of flow guide portions of each of the plurality of flow guide groups are arranged in the third direction.

7. The battery according to claim 6, wherein the flow guide portion has a rib structure extending along the third direction.

8. The battery according to claim 7, wherein in the first direction, the second gap faces its adjacent flow guide portion and is configured to hinder the electrolyte from flowing from the fourth end to the third end.

9. The battery according to claim 4, wherein each flow guide portion has a fifth end and a sixth end arranged opposite to each other in the first direction, the fifth end faces the cover assembly, and each flow guide portion has a flow guide surface that is inclined from the fifth end toward the sixth end.

10. The battery according to claim 9, wherein the flow guide surface is an arcuate surface structure, and the flow guide portion forms an arcuate extending structure as a whole.

11. The battery according to claim 9, wherein the flow guide portion is a triangular structure; one corner of the triangular flow guide portion faces adjacent second gap in the first direction, two sides of triangle forming the corner serve as the flow guide surface, and a third side of the triangle hinders the electrolyte from flowing from the fourth end to the third end.

12. The battery according to claim 4, wherein each flow guide portion comprises a first sub-portion, a second sub-portion and a third sub-portion that are connected with each other, the first sub-portion is disposed on a side, facing the cover assembly, of the second sub-portion and the third sub-portion, and the first sub-portion extends along the first direction, and between two adjacent flow guide portions in each flow guide portion, the second gap is formed between the second sub-portion of one flow guide portion and the third sub-portion of the other flow guide portion;
in the first direction, at least part of the first sub-portion faces the second gap, the second sub-portion and the third sub-portion each extend inclinedly from an end connected to the first sub-portion toward the fourth end, and an included angle is formed between an extending direction of the second sub-portion and an extending direction of the third sub-portion;
the first sub-portion has a seventh end away from the second sub-portion to which it is connected, the second sub-portion has an eighth end away from the first sub-portion to which it is connected, the third sub-portion has a ninth end away from the first sub-portion to which it is connected, and in the direction intersecting the first direction, a width of the seventh end is *c*, satisfying *b* ≥ *c*, and a distance between the eighth end and the ninth end is *d*, satisfying *b* < *d*.

13. The battery according to claim 4, wherein the flow guide assembly further comprises a first baffle and a second baffle, each flow guide portion is connected between the first baffle and the second baffle, the first baffle, the second baffle and each flow guide portion define the flow guide channel, the first baffle, the second baffle and each flow guide portion are disposed in the liquid storage cavity, the first baffle is connected to the outer housing, and the second baffle is connected to the inner housing; and
a communication port is formed through the second baffle toward the unidirectional conducting member, and the communication port communicates with the flow guide channel.

14. The battery according to claim 13, wherein the first baffle and the second baffle are integrally formed as a frame structure surrounding the inner housing, and the first baffle, the second baffle and the flow guide portion are integrally formed and assembled into the liquid storage cavity.

15. The battery according to claim 3, wherein a plurality of liquid storage cavities are provided, the plurality of liquid storage cavities are distributed around an outer peripheral side of the inner housing, and at least part of the liquid storage cavities communicate with each other.

16. The battery according to claim 3, wherein the battery further has a second direction and a third direction, and the first direction, the second direction and the third direction intersect each other pairwise;
the inner housing has a first side and a second side arranged opposite to each other in the second direction, and the inner housing has a third side and a fourth side arranged opposite to each other in the third direction; and
the liquid storage cavity is disposed on one of the first side, the second side, the third side and the fourth side.

17. The battery according to claim 16, wherein split-type first baffle and second baffle structures are respectively disposed corresponding to the first side, the second side, the third side and the fourth side of the inner housing; and
the plurality of liquid storage cavities formed by the split-type first baffle and second baffle communicate with each other through the communication port and a notch disposed at the first baffle corresponding to the communication port.

18. The battery according to claim 3, wherein the battery further has a second direction and a third direction, and the first direction, the second direction and the third direction intersect each other pairwise;
the inner housing has a first side and a second side arranged opposite to each other in the second direction, and the inner housing has a third side and a fourth side arranged opposite to each other in the third direction; and
a plurality of liquid storage cavities are provided, the plurality of liquid storage cavities are arranged at intervals on at least one of the first side, the second side, the third side and the fourth side, and the inner housing is provided with the unidirectional conducting member corresponding to each of the plurality of liquid storage cavities.

19. The battery according to claim 1, wherein the inner housing has a first end facing the cover assembly in the first direction; and
the electrode assembly comprises a cell body and a tab connected to the cell body, the tab is located at an end of the cell body facing the cover assembly, and in the first direction, the end of the cell body facing the cover assembly is lower than the first end or flush with the first end.

20. A battery pack, comprising the battery according to any one of claims 1 to 19.
